# EUROPEAN PATENT SPECIFICATION

(11) **EP 4 423 161 B1**
(45) Date of publication and mention of the grant of the patent: **17.09.2025**
(21) Application number: 22809387.8
(22) Date of filing: 25.10.2022
(51) Int. Cl.: C08G 18/80, B32B 27/40, C08K 3/36, C09D 175/06, C08G 18/10, C08G 18/44

(54) **COATED FILM**
BESCHICHTETE FOLIE
FILM REVÊTU

(30) Priority: 26.10.2021 CN 202111251429; 07.12.2021 EP 21212678
(43) Date of publication of application: 04.09.2024
(73) Proprietor: Covestro Deutschland AG, 51373 Leverkusen (DE)
(72) Inventor: YE, Huimin, Shanghai 200433 (CN); WANG, Tingwen, Shanghai) Investment Company Limited N. 33, Qinqiao Road, Jinqiao Exp. Processing Zone 201206 (CN); FENG, Meng, Shanghai (CN); ZHANG, Xianyun, Shanghai (CN); HUANG, Linxia, Shanghai (CN)
(74) Representative: Levpat
(86) International application number: PCT/EP2022/079678
(87) International publication number: WO 2023/072882

(56) References cited:
- US-A1- 2021 198 842

## Description

### Technical field

The invention relates to a coated film and a method for preparing the same, use of the coated film for manufacturing shaped bodies, a method for manufacturing shaped bodies from the coated film, and a shaped body made therefrom.

### Prior art

Labels for shoes and clothing are usually made of thermoplastic polyurethane film. The pattern or text is firstly printed on the surface of the thermoplastic polyurethane film, which is then attached to the shoes or clothing. In order to prevent the pattern or text in the middle part of the film from becoming blurred due to hot pressing, edge laminating is usually used in the laminating process for the thermoplastic polyurethane film and shoes or clothing to ensure the sharpness of the printed pattern or text.

WO 2017/046091 A1 discloses a coated film comprising a plastic film and a radiation-curable aqueous coating agent, wherein the coating agent comprises a polyurethane (meth)acrylate and inorganic nanoparticles with an average particle size of 1 nm-200 nm. The coated film has anti-blocking property and elasticity, and shows good hydrolysis resistance and chemical resistance after radiation curing.

US 2014/0202749 A1 discloses a resin composition comprising methacrylate. The composition is applied to the surface of a substrate to form a coating, and a pattern may be printed on the surface of the coating. The coating formed by the composition has good waterproof performance.

WO 2006/079098 A1 discloses an aqueous dispersion for preparing nanoparticle/polyurethane composites by forming a mixture of nanoparticles and a continuous mass of a polyurethane prepolymer in the substantial absence of water and dispersing the mixture so made in aqueous medium. Alternatively, a polyurethane prepolymer or a mixture of nanoparticles and a continuous mass of a polyurethane prepolymer is dispersed into an aqueous dispersion of nanoparticles. The aqueous dispersion may have good abrasion resistance.

WO 98/00458 A1 discloses a film consisting of at least two layers, which contains a polyurethane film with Shore hardness between 70A and 80D as one layer, and a UV radiation curable system as another layer. The double-layer film has good wear resistance.

Apparently, the problem that thermoplastic polyurethane films are not resistant to hot pressing has not been solved in the prior art. It is desirable to have a film, in which the pattern or text thereon remains sharp after the hot pressing process.

### Summary of invention

The object of the invention is to provide a coated film and a method for preparing the same, use of the coated film for manufacturing shaped bodies, a method for manufacturing shaped bodies from the coated film, and a shaped body made therefrom.

A coated film according to the present invention comprises a plastic film with Shore hardness of not less than 80A and a coating formed by applying an aqueous coating composition to the plastic film, wherein the plastic film is a film of a thermoplastic polyurethane based on polyester polyol, and the aqueous coating composition comprises:
a. 45% by weight to 85% by weight of a dispersion of an anionic polyurethane based on polycarbonate polyol;
b. 0% by weight to 40% by weight of a dispersion of an anionic polyurethane based on polyether polyol;
c. 2% by weight to 18% by weight of a dispersion of anionic silica;
d. 0.5% by weight to 10% by weight of a blocked isocyanate; and
e. 0.1% by weight to 10% by weight of an additive;
the amounts above being relative to the total weight of the composition.

According to an aspect of the present invention, a method for preparing the coated film according to the present invention is provided, which comprises the following steps:
i. providing an aqueous coating composition, comprising:
   a. 45% by weight to 85% by weight of a dispersion of an anionic polyurethane based on polycarbonate polyol;
   b. 0% by weight to 40% by weight of a dispersion of an anionic polyurethane based on polyether polyol;
   c. 2% by weight to 18% by weight of a dispersion of anionic silica;
   d. 0.5% by weight to 10% by weight of a blocked isocyanate; and
   e. 0.1% by weight to 10% by weight of an additive;
   the amounts above being relative to the total weight of the composition;
ii. applying the composition of step i to at least one side of a film of a thermoplastic polyurethane based on polyester polyol with Shore hardness of not less than 80A; and
iii. drying, to obtain the coated film.

According to another aspect of the present invention, use of the coated film according to the present invention for manufacturing shaped bodies is provided.

According to another aspect of the present invention, a method for manufacturing shaped bodies is provided, which comprises the following steps:
A. providing a coated film according to the present invention;
B. optionally painting, printing or stamping at least one layer on the coated side of the film; and
C. bonding the side of the film facing away from the coating to the substrate by hot pressing, to obtain a shaped body.

According to still another aspect of the present invention, a shaped body manufactured by the method for manufacturing shaped bodies according to the present invention is provided. According to still another aspect of the present invention, a shaped body comprising the coated film according to the present invention is provided.

The thermoplastic polyurethane film comprised in the coated film of the present invention can be firmly bonded to the substrate after hot pressing, and has excellent adhesion. The coating formed by the aqueous coating composition of the present invention on the surface of the thermoplastic polyurethane film has excellent surface dryness, anti-blocking property, and excellent heat resistance, and can withstand the hot pressing condition up to 205°C. After the coated film of the present invention is hot-pressed, the pattern or text on the coating remains sharp, and the surface has a matte effect. The coated film of the present invention is applicable to the thermal transfer and the full-area hot pressing process, and can be widely used for printing labels of shoes, clothing and the like.

### Embodiments

The present invention provides a coated film comprising a plastic film with Shore hardness of not less than 80A and a coating formed by applying an aqueous coating composition to the plastic film, wherein the plastic film is a film of a thermoplastic polyurethane based on polyester polyol, and the aqueous coating composition comprises: a. 45% by weight to 85% by weight of a dispersion of an anionic polyurethane based on polycarbonate polyol; b. 0% by weight to 40% by weight of a dispersion of an anionic polyurethane based on polyether polyol; c. 2% by weight to 18% by weight of a dispersion of anionic silica; d. 0.5% by weight to 10% by weight of a blocked isocyanate; and e. 0.1% by weight to 10% by weight of an additive; the amounts above being relative to the total weight of the composition. The present invention further provides a method for preparing the coated film, use of the coated film for manufacturing shaped bodies and a method for manufacturing shaped bodies from the coated film, and a shaped body made therefrom.

The term "coating composition" used herein refers to a material that can be applied to the surface of an object by a variety of processes to form a continuous solid coating with firm adhesion and certain strength.

The term "drying" used herein refers to the process of removing volatile constituents.

The term "polyurethane dispersion" used herein refers to polyurethane urea dispersion and/or polyurethane polyurea dispersion and/or polyurea dispersion and/or polythiourethane dispersion.

The term "dispersion of an anionic polyurethane based on polycarbonate polyol" used herein refers to an aqueous polyurethane dispersion obtained by the reaction of a system comprising polycarbonate polyol, wherein the aqueous polyurethane dispersion comprises anionic groups.

The term "dispersion of an anionic polyurethane based on polyether polyol" used herein refers to an aqueous polyurethane dispersion obtained by the reaction of a system comprising polyether polyol, wherein the aqueous polyurethane dispersion comprises anionic groups.

The term "film of a thermoplastic polyurethane based on polyester polyol" used herein refers to a thermoplastic polyurethane film obtained by the reaction of a system comprising polyester polyol.

The term "film of a thermoplastic polyurethane based on polyether polyol" used herein refers to a thermoplastic polyurethane film obtained by the reaction of a system comprising polyether polyol.

The term "blocked isocyanate" used herein refers to an isocyanate compound in which the isocyanate group is blocked.

The term "minimum softening temperature of the thermoplastic polyurethane film" used herein refers to the TMA start temperature, and "maximum softening temperature of the thermoplastic polyurethane film" refers to the TMA end temperature.

### Coated film

The grade of surface dryness and anti-blocking of the coated film is preferably of level 3 to 5.

The adhesion force of the coated film is preferably of 17 N/30 mm to 50 N/30 mm, tested by using GOTECH tensile machine GOTECH/AI-3000 from GOTECH Testing Machines Inc. according to GB/T 8949-2008.

The haze value of the coated film is preferably 80 to 130, tested with haze meter BYK4601 from BYK.

The pattern sharpness of the coated film before hot pressing is preferably of level 3 to 5, and the pattern sharpness after hot pressing is preferably of level 3 to 5.

### Coating composition

### Component a: a dispersion of an anionic polyurethane based on polycarbonate polyol

The dispersion of an anionic polyurethane based on polycarbonate polyol has preferably at least one of the following characteristics:
weight average molecular weight of 1000000-20000000, tested by gel chromatography according to GB/T 21863-2008;and
100% modulus of 5 MPa-10 MPa, tested according to DIN 53504.

The weight average molecular weight of the dispersion of an anionic polyurethane based on polycarbonate polyol is of 1500000-12000000, tested by gel chromatography according to GB/T 21863-2008.

The dispersion of an anionic polyurethane based on polycarbonate polyol is preferably a dispersion of carboxyl-containing polyurethane based on polycarbonate polyol.

The carboxyl content of the dispersion of carboxyl-containing polyurethane based on polycarbonate polyol is preferably of 0.05% by weightto 2% by weight, most preferably 0.6% by weight to 1% by weight, relative to the total weight of solid constituents of the dispersion of carboxyl-containing polyurethane based on polycarbonate polyol.

The dispersion of an anionic polyurethane based on polycarbonate polyol is preferably in an amount of 52% by weight to 84% by weight, preferably 64% by weight to 82% by weight, most preferably 79% by weight to 81% by weight, relative to the total weight of the aqueous coating composition.

The solid content of the dispersion of an anionic polyurethane based on polycarbonate polyol is preferably of 30% by weight to 50% by weight, most preferably 39% by weight to 41% by weight, relative to the total weight of the dispersion of an anionic polyurethane based on polycarbonate polyol.

The residual organic solvent in the dispersion of an anionic polyurethane based on polycarbonate polyol is preferably in an amount of less than 1.0% by weight, relative to the total weight of the dispersion of an anionic polyurethane based on polycarbonate polyol.

The fusion enthalpy of the polyurethane polymer in the dispersion of an anionic polyurethane based on polycarbonate polyol at 20°C-100°C is preferably less than 3 J/g, obtained by measuring the first heating curve by DSC at a heating rate of 20 K/min according to DIN65467.

The tensile strength of the dispersion of an anionic polyurethane based on polycarbonate polyol is preferably of 40 MPa-60 MPa, tested according to DIN53504-S2.

The dispersion of an anionic polyurethane based on polycarbonate polyol can be directly added to the aqueous coating composition as a dispersion. Alternatively, a mixture of the anionic polyurethane based on polycarbonate polyol and water can be added to the aqueous coating composition, and mixed to form a dispersion.

The dispersion of an anionic polyurethane based on polycarbonate polyol comprises an anionic polyurethane based on polycarbonate polyol and water.

The dispersion of an anionic polyurethane based on polycarbonate polyol is preferably obtained by the reaction of a system comprising a polycarbonate polyol and a polyisocyanate.

The polycarbonate polyol is preferably obtained by reacting a carbonic acid derivative such as diphenyl carbonate, dimethyl carbonate or phosgene with a diol.

The diol is preferably one or more of ethylene glycol, 1,2-propanediol, 1,3-propanediol, 1,3-butanediol, 1,4-butanediol, 1,6-hexanediol, 1,8-octanediol, neopentyl glycol, 1,4-dimethylolcyclohexane, 2-methyl-1,3-propanediol, 2,2,4-trimethylpentane-1,3-diol, dipropylene glycol, polypropylene glycol, dibutylene glycol, polybutylene glycol, bisphenol A, tetrabromobisphenol A and lactone-modified diols, most preferably 1,6-hexanediol and/or derivatives thereof.

Preferably, the diol comprises not less than 40% by weight of 1,6-hexanediol and/or a derivative of hexanediol, relative to the total weight of the diol.

The derivative of hexanediol is preferably a compound, in which terminal OH groups contain ether or ester groups, for example, a product obtained by reacting 1 mol of hexanediol with at least 1 mol, preferably 1-2 mol of ε-caprolactone or by etherifying the hexanediol itself to form di- or trihexanediol.

### Component b: a dispersion of an anionic polyurethane based on polyether polyol

The dispersion of an anionic polyurethane based on polyether polyol has preferably at least one of the following characteristics:
weight average molecular weight of 200000-600000, most preferably 300000-450000, tested by gel chromatography according to GB/T 21863-2008; and
100% modulus of 1 MPa-4 MPa, tested according to DIN 53504.

The 100% modulus of the dispersion of an anionic polyurethane based on polyether polyol is preferably of 1.5 MPa-2.5 MPa, most preferably 2 MPa-2.5 MPa, tested according to DIN 53504.

The dispersion of an anionic polyurethane based on polyether polyol is preferably a dispersion of carboxyl-containing polyurethane based on polyether polyol.

The carboxyl content of the dispersion of carboxyl-containing polyurethane based on polyether polyol is preferably of 0.05% by weight to 0.5% by weight, most preferably 0.05% by weight to 0.15% by weight, relative to the total weight of solid constituents of the dispersion of carboxyl-containing polyurethane based on polyether polyol.

The dispersion of an anionic polyurethane based on polyether polyol is preferably in an amount of 0% by weight to 30% by weight, relative to the total weight of the aqueous coating composition.

The solid content of the dispersion of an anionic polyurethane based on polyether polyol is preferably of 30% by weight to 60% by weight, most preferably 39% by weight to 41% by weight, relative to the total weight of the dispersion of an anionic polyurethane based on polyether polyol.

The residual organic solvent in the dispersion of an anionic polyurethane based on polyether polyol is preferably in an amount of less than 1.0% by weight, relative to the total weight of the dispersion of an anionic polyurethane based on polyether polyol.

The dispersion of an anionic polyurethane based on polyether polyol can be directly added to the aqueous coating composition as a dispersion. Alternatively, a mixture of the anionic polyurethane based on polyether polyol and water can be added to the aqueous coating composition, and mixed to form a dispersion.

The dispersion of an anionic polyurethane based on polyether polyol comprises an anionic polyurethane based on polyether polyol and water.

The dispersion of an anionic polyurethane based on polyether polyol is preferably obtained by the reaction of a system comprising a polyether polyol and a polyisocyanate.

The polyether polyol is preferably one or more of polyaddition products of styrene oxide, ethylene oxide, propylene oxide, tetrahydrofuran, butylene oxide, and epichlorohydrin, and mixed addition and grafting products thereof, and condensation products of polyols or mixtures thereof, and alkoxylation products of polyols, amines and amino alcohols.

### Component c: a dispersion of anionic silica

The Z-average particle size of the dispersion of anionic silica is preferably of 10 nm-50 nm, tested according to ISO13321. Specifically, 1 drop of the dispersion of anionic silica is added to 50 ml of ultrapure water, stirred lightly to dilute, and tested with Malvern Zetasizer Nano ZS, with test temperature of 23.0±0.1°C; test material setting: polystyrene latex (refractive index of 1.590, absorption value of 0.010); dispersant setting: water (temperature of 23.0°C, viscosity of 0.9308 mPas (centipoise), refractive index of 1.330); equilibrium time of 60 seconds; type of sample cell: disposable sample cell DTS0012; positioning method: automatic attenuation, automatic optimization of positioning optimization; analysis mode: conventional purpose (normal resolution); test angle of 173° backscatter (NIBS default). Each sample is tested for 3 rounds, 10 times per round, and each test time is of 10 seconds, and the average of all tests is taken as Z-average particle size. The Z-average particle size of the dispersion of anionic silica is further preferably of 25 nm-50 nm, most preferably 25 nm-35 nm.

The density of the dispersion of anionic silica is preferably of 1g/cm³-2 g/cm³, most preferably 1g/cm³-1.5g/cm³, tested according to DIN 51757.

The pH value of the dispersion of anionic silica is preferably of 8-11, tested according to DIN ISO 976.

The dispersion of anionic silica is preferably in an amount of 2% by weight to 18% by weight, more preferably 4% by weight to 16% by weight, most preferably 6% by weight to 10% by weight, relative to the total weight of the aqueous coating composition.

The solid content of the dispersion of anionic silica is preferably of 20% by weight to 50% by weight, more preferably 25% by weight to 45% by weight, most preferably 25% by weight to 35% by weight, relative to the total weight of the dispersion of anionic silica.

The dispersion of anionic silica is preferably a dispersion of anionic amorphous silica.

### Component d: blocked isocyanate

The blocked isocyanate is preferably a hydrophilically modified aliphatic isocyanate.

The solid content of the blocked isocyanate is preferably of 20% by weight to 50% by weight, relative to the total weight of the blocked isocyanate.

The content of the isocyanate groups in the blocked isocyanate is preferably of 10% by weight to 15% by weight, relative to the total weight of solid constituents of the blocked isocyanate.

The viscosity of the blocked isocyanate is preferably of less than 1500 mPa·s, tested with an MV-DIN rotor according to DIN EN ISO 3219: 1994-10 at 23°C and at a shear rate of 10 s⁻¹.

The blocking agent for blocking the isocyanate is preferably one or more of caprolactam, butanone oxime, dimethylpyrazole, diethyl diacetate, pyrazole and diisopropylamine.

The blocked isocyanate is preferably in an amount of 6% by weight to 10% by weight, most preferably 7% by weight to 9% by weight, relative to the total weight of the aqueous coating composition.

### Component e: additive

The additive is preferably one or more of wetting agents, defoamers, thickeners, and other additives that can be added to the aqueous coating composition as is well known to those skilled in the art.

The amount of the additive may be an amount that can be added as is well known to those skilled in the art.

The additive is preferably in an amount of 3% by weight to 6% by weight, most preferably 3.5% by weight to 4.5% by weight, relative to the total weight of the aqueous coating composition.

### Plastic film

The film of a thermoplastic polyurethane based on polyester polyol has preferably at least one of the following characteristics:
specific gravity of 1.1-1.3, tested according to D-792;
tensile strength of 50 MPa-80 MPa, tested by using GOTECH tensile machine GOTECH/AI-3000 from GOTECH Testing Machines Inc. according to DIN EN ISO527;
elongation at break of 500%-700%, tested by using GOTECH tensile machine GOTECH/AI-3000 from GOTECH Testing Machines Inc. according to DIN EN ISO527;
maximum softening temperature of 130°C-200°C, preferably 140°C-190°C, more preferably 150°C-185°C, most preferably 155°C-180°C, tested with a thermomechanical analyzer from Mettler Toledo according to E2347-04;
minimum softening temperature is of 100°C-160°C, preferably 110°C-160°C, more preferably 120°C-160°C, most preferably 125°C-155°C, tested with a thermomechanical analyzer from Mettler Toledo according to E2347-04; and
100% modulus of 2 MPa-12 MPa, preferably 3 MPa-11 MPa, more preferably 4 MPa-11 MPa, and most preferably 5 MPa-11 MPa, tested by using GOTECH tensile machine GOTECH/AI-3000 from GOTECH Testing Machines Inc. according to DIN EN ISO527.

The Shore hardness of the plastic film is preferably 82A-95A, more preferably 85A-95A, and most preferably 88 A-95 A, tested by using Shore hardness tester according to ASTM D 2240.

The dry film thickness of the coating formed by applying the aqueous coating composition to the plastic film is preferably of 0.01 mm to 0.10 mm. The coating may be single-layered or multi-layered.

The coated film may be coated on one side or on both sides, and is preferably coated on one side.

In the case of coating on one side, a thermally deformable adhesive layer may optionally be applied on the back side of the film, that is, on the surface where the coating composition is not applied. For this purpose, hot-melt adhesives or radiation-curable adhesives are preferably suitable depending on the method used. In addition, a protective layer may also be applied on the surface of the adhesive layer.

In addition, a substrate such as a fabric may be provided on the back side of the film.

Optionally, the plastic film may be painted, printed or stamped with one or more layers, after the aqueous coating composition is applied. The layer may be colored or functional, which is applied over the entire surface or only partially, for example, in the form of printed pattern.

### Method for preparing the coated film

The drying is preferably performed at 60°C to 70°C.

A method for preparing the coated film preferably comprises the following steps:
i. providing an aqueous coating composition, comprising:
   a. 45% by weight to 85% by weight of a dispersion of an anionic polyurethane based on polycarbonate polyol;
   b. 0% by weight to 40% by weight of a dispersion of an anionic polyurethane based on polyether polyol;
   c. 2% by weight to 18% by weight of a dispersion of anionic silica;
   d. 6% by weight to 10% by weight of a blocked isocyanate; and
   e. 0.1% by weight to 6% by weight of an additive;
   the amounts above being relative to the total weight of the composition;
ii. applying the composition of step i to at least one side of a film of a thermoplastic polyurethane based on polyester polyol with Shore hardness of not less than 80A; and
iii. drying, to obtain the coated film.

A method for preparing the coated film further preferably comprises the following steps:
i. providing an aqueous coating composition, comprising:
   a. 45% by weight to 85% by weight of a dispersion of an anionic polyurethane based on polycarbonate polyol;
   b. 0% by weight to 40% by weight of a dispersion of an anionic polyurethane based on polyether polyol;
   c. 2% by weight to 18% by weight of a dispersion of anionic silica;
   d. 6% by weight to 10% by weight of a blocked isocyanate; and
   e. 0.1% by weight to 6% by weight of an additive;
   the amounts above being relative to the total weight of the composition;
ii. applying the composition of step i to at least one side of a film of a thermoplastic polyurethane based on polyester polyol, wherein the thermoplastic polyurethane film has start softening temperature of 125°C-155°C, melting temperature of 155°C-180°C, 100% modulus of 5 MPa-11 MPa, and Shore hardness of 88A-95A; and
iii. drying at 60°C-70°C, to obtain the coated film.

A method for preparing the coated film most preferably comprises the following steps:
i. providing an aqueous coating composition, comprising:
   a. 52% by weight to 84% by weight of a dispersion of an anionic polyurethane based on polycarbonate polyol;
   b. 0% by weight to 30% by weight of a dispersion of an anionic polyurethane based on polyether polyol;
   c. 4% by weight to 16% by weight of a dispersion of anionic amorphous silica;
   d. 6% by weight to 8% by weight of a blocked isocyanate; and
   e. 4% by weight to 5% by weight of an additive; the amounts above being relative to the total weight of the composition;
ii. applying the composition of step i to at least one side of a film of a thermoplastic polyurethane based on polyester polyol, wherein the thermoplastic polyurethane film has start softening temperature of 125°C-155°C, melting temperature of 155°C-180°C, 100% modulus of 5 MPa-11 MPa, and Shore hardness of 88A-95A; and
iii. drying at 60°C-70°C, to obtain the coated film.

The layer may be colored or functional, which is present on the entire surface or only on part thereof.

The substrate is preferably a fabric.

The shaped body is preferably a shoe or clothing.

### Examples

The wording "and/or" used herein refers to one or all of the cited elements.

All percentages in the present invention are weight percentage, unless otherwise stated.

The analysis and measurement in the present invention are all performed at 23°C, unless otherwise stated.

Unless otherwise indicated, the wording "a", "an", and "the" used herein are intended to include "at least one" or "one or more". For example, the wording "a component" refers to one or more components, therefore more than one component may be considered and may be adopted or used in the implementation of the embodiments.

The solid content of the dispersion is tested by using a moisture analyzer HS153 from Mettler Toledo according to DIN-EN ISO 3251.

The grade of surface dryness and anti-blocking of the coated film (level 1 to 5, from poor to good) was tested as follows. The coated film was cut into 10cm×5cm sample strips. The coated surface of a same strip was stacked on the coated surface of another sample strip, and then a load of 1 kg was pressed thereon. After being left at room temperature of 23°C for 24 hours, the load was removed, and the two samples stacked together were rated according to the degree of adhesion. If there was no adhesion, the grade of surface dryness and anti-blocking was of level 5. If there was slight adhesion to each other, and they could be separated spontaneously, the grade of surface dryness and anti-blocking was of level 4. If there was slight adhesion to each other, and they could be separated manually, the grade of surface dryness and anti-blocking was of level 3. If there was obvious adhesion, and they could be peeled off manually, the grade of surface dryness and anti-blocking was of level 2. If there was obvious adhesions, and they were stuck to each other and could not be separated immediately, the grade of surface dryness and anti-blocking was of level 1. The grade of surface dryness and anti-blocking of level 3 to 5 was regarded as qualified. The unqualified grade of surface dryness and anti-blocking of coated films may cause the coated surface of the film to stick to another plastic film during the rolling process.

The adhesion force (peeling force) of the coated film was tested in the unit of N/30mm by using GOTECH tensile machine GOTECH/AI-3000 from GOTECH Testing Machines Inc. according to GB/T 8949-2008. The adhesion force of 17 N/30mm-50 N/30mm was regarded as qualified. Good adhesion ensured that the coating and the plastic film adhered firmly, otherwise the coating and the plastic film tended to separate from each other.

The haze value of coated films was tested with haze meter BYK4601 from BYK. The haze value of 80 to 130 was regarded as qualified. The lower the haze value, the higher the transparency.

Pattern sharpness of coated films before hot pressing:
The pattern sharpness was observed visually. It was rated with level 1 to 5 from poor to good. If the pattern was sharp and had no deformation, it was of level 5. If the pattern was sharp and had substantively no deformation, it was of level 4. If the pattern was relative sharp but had slight deformation, it was of level 3. If the pattern was slightly blurred and had deformation or vignetting effect, it was of level 2. If the pattern was blurred and had severe deformation or vignetting effect, it was of level 1. The pattern sharpness of level 3 to 5 was regarded as qualified.

Pattern sharpness of coated films after hot pressing:
It was tested by using a fabric hot press tester SC125X50 frin Xiangshan Yongcheng Printing Material Co., Ltd. The film was heat-pressed at 205°C for 10 seconds with a pressure of 490 kPa (5 kgf/cm²).

The pattern sharpness after hot pressing was observed visually. The pattern sharpness after hot pressing was rated with level 1 to 5 from poor to good. If the coating was not damaged and the pattern was sharp and had no deformation, it was of level 5. If the coating was not damaged and the pattern was sharp and had substantively no deformation, it was of level 4. If the coating was slightly damaged or the pattern was relative sharp but had slight deformation, it was of level 3. If the coating was damaged or the pattern was slightly blurred and had deformation or vignetting effect, it was of level 2. If the coating was obviously damaged or the pattern was blurred and had severe deformation or vignetting effect, it was of level 1. The pattern sharpness of level 3 to 5 was regarded as qualified.

### Raw materials and agents

Impranil^{®} DLC-F: dispersion of an anionic polyurethane based on polycarbonate polyol as a milky white liquid, with solid content of 40±1% by weight, fusion enthalpy of the polyurethane of less than 3 J/g, tensile strength of about 50 MPa, 100% modulus of about 6.0 MPa, weight average molecular weight of 1630000-10600000, and carboxyl content of 0.8% by weight (based on solid content), available from Covestro.

Baybond^{®} PU 407: dispersion of an anionic or non-ionic polyurethane based on polyester polyol as a milky white liquid, with solid content of 40±1%, available from Covestro.

Impranil^{®} 1343: dispersion of an anionic polyurethane based on aliphatic polyether polyol as a milky white liquid, with solid content of 40±1% by weight, 100% modulus of about 2.2 MPa, weight average molecular weight of 330000-400000, and carboxyl content of 0.09% by weight (based on solid content), available from Covestro.

Impranil^{®} DL 1069: dispersion of an anionic polyurethane based on aliphatic polyether polyol as a milky white liquid, with solid content of 50±1% by weight, fusion enthalpy of the polyurethane of less than 3 J/g, tensile strength of about 50 MPa, 100% modulus of about 1.6 MPa, and weight average molecular weight of 250000-400000, available from Covestro.

Imprafix^{®}2794: hydrophilically modified blocked aliphatic isocyanate with solid content of 38% by weight, isocyanate group (NCO) content of 12.7% by weight (based on solid content), and viscosity of < 1500 mPa.s, available from Covestro.

Impranil^{®} S 3000: dispersion of anionic amorphous silica as a transparent liquid, with solid content of 30% by weight, Z-average particle size of 28 nm, density of 1.21 g/cm³, and pH value of 10, available from Covestro.

Dispercoll^{®} S 4020: dispersion of anionic amorphous silica as a translucent liquid, with solid content of 40% by weight, Z-average particle size of 46 nm, density of 1.29 g/cm³, and pH value of 9, available from Covestro.

Acematt TS 100: fumed silica as white powder, with particle size (ISO 13320-1) D₅₀ of 9.5 µm, pH value of 6.5, and specific surface area (ISO 9277) of 250g/m², available from Evonik Specialty Chemicals. Method for preparing 10% aqueous dispersion of Acematt TS 100: Acematt TS 100 is dispersed in distilled water to form a dispersion with a concentration of 10%.

BYK093: silicone-containing defoamer as a turbid liquid, available from BYK.

BYK349: silicone surfactant as a light brown liquid, available from BYK.

Borchigel L75N: Rheology additive as a transparent liquid with a concentration of 20%, available from Borchers Company.

Platilon^{®} U2102Ak: film of a thermoplastic polyurethane based on polyester polyol having the following characteristics: Shore hardness of 93A, specific gravity of 1.21, tensile strength of 65 MPa, elongation at break of 540%, 100% modulus of 10.5 MPa, minimum softening temperature of 150°C, maximum softening temperature of 180°C, and with translucent natural color, available from Covestro.

Platilon^{®} PT7511: film of a thermoplastic polyurethane based on polyether polyol having the following characteristics: hardness of 90A, specific gravity of 1.13, tensile strength of 67 MPa, elongation at break of 550%, 100% modulus of 8.3 MPa, minimum softening temperature of 151°C, maximum softening temperature of 171°C, and with translucent natural color, available from Covestro.

Platilon^{®} PT6411: film of a thermoplastic polyurethane based on polyether polyol having the following characteristics: Shore hardness of 71A, specific gravity of 1.16, tensile strength of 55 MPa, elongation at break of 900%, 100% modulus of 3.5 MPa, minimum softening temperature of 140°C, maximum softening temperature of 167°C, and with translucent natural color, available from Covestro.

Platilon^{®} PS8010: film of a thermoplastic polyurethane based on polyester polyol having the following characteristics: Shore hardness of 92A, specific gravity of 1.21, tensile strength of 69 MPa, elongation at break of 610%, 100% modulus of 9.9 Mpa, minimum softening temperature of 142°C, maximum softening temperature of 163°C, and with translucent natural color, available from Covestro.

Platilon^{®} U2100C-T: film of a thermoplastic polyurethane based on polyester polyol having the following characteristics: Shore hardness of 88A, specific gravity of 1.2, tensile strength of 54 MPa, elongation at break of 665%, 100% modulus of 6 MPa, minimum softening temperature of 125°C, maximum softening temperature of 155°C, and with translucent natural color, available from Covestro.

Platilon^{®} HU2105C-T: based of a thermoplastic polyurethane film on polyester polyol having the following characteristics: Shore hardness of 75A, specific gravity of 1.2, tensile strength of 47 MPa, elongation at break of 861%, 100% modulus of 3.7 MPa, minimum softening temperature of 105°C, maximum softening temperature of 145°C, and with translucent natural color, available from Covestro.

### Equipment

Fume hood: Model 1524 X 84 DE2006-7 B6, manufactured by Schneider Electric Co., Ltd. Mechanical disperser: Model SFJ400, manufactured by Shanghai Modern Environmental Engineering Technology Co., Ltd.

Electronic balance: Model BSA4202S, Max 4200g, d=0.01g, manufactured by Sartorius Group.

Film thickness gauge: Model SM-114, manufactured by TECLOCK Co.,Ltd., Japan. Mathis laboratory coater: Model CH-8156, manufactured by Werner Mathis AG.

Mathis laboratory dryer: Model CH-8156, manufactured by Werner Mathis AG.

Table 1 shows components of the aqueous coating compositions and content of each component; Table 2 shows coated films comprising various plastic films and coatings formed from various aqueous coating compositions, and test results of performance of the films.

### Preparation of aqueous coating compositions

According to the components and contents shown in Table 1, an appropriate amount of polyurethane dispersion was weighed with an electronic balance (BSA4202S) into a plastic compounding cup, and dispersed with mechanical disperser (SFJ-400). Then, BYK 093, BYK 349, Imprafix^{®} 2794, a silica dispersion and Borchi gel L 75N were added dropwise in sequence. According to the viscosity change of the mixture (the viscosity being tested by Brookfield viscometer with a 64# rotor at a rotation speed of 20rpm), the rotation speed of the mechanical disperser was adjusted to 1500 rpm. The mixture was continuously stirred for 5-10 minutes until it was uniformly mixed, and filtered to obtain an aqueous coating composition.

### Preparation of coated films

According to Table 2, a plastic film with a size of 25cm*40cm was fixed on the Mathis coating rack and placed on the Mathis laboratory coater. The gap between the coating blade and the plastic film was adjusted to 0.02 mm. An appropriate amount of the aqueous coating composition was coated by pulling the blade across the surface of the plastic film at a uniform speed. The Mathis coating rack was dried in the Mathis laboratory dryer firstly at 60°C for 8 min (the upper and lower air speed of the dryer of 700 rpm), and then at 70 °C for 8 min (the upper and lower air speed of the dryer of 700 rpm). After drying, the Mathis coating rack was taken out and placed on a stainless steel test bench to cool to room temperature. Then, the coated plastic film was removed from the coating rack and placed on the storage rack steadily.

### Method for printing pattern

The coated film after coating and drying was cut into a 30 mm-wide strip, and placed on a printer Novex XLP504, with the coated surface facing the ribbon. Printing was performed according to the pattern set by input.

**Table 1 Components and content thereof in the aqueous coating compositions**

| Aqueous coating composition | Polyurethane dispersion/g | | | | Silica dispersion/g | | | Blocked isocyanate/g | Additive/g | | |
|---|---|---|---|---|---|---|---|---|---|---|---|
| | Impranil^{®} DLC-F | Baybond^{®} PU 407 | Impranil^{®} 1343 | Impranil^{®} DL 1069 | Impranil^{®} S 3000 | 10% aqueous dispersion of Acematt TS 100 | Dispercoll^{®} S 4020 | Imprafix^{®} 2794 | BYK 093 | BYK 349 | Borchigel L 75N |
| 1 | 80 | | | | 8 | | | 8 | 0.24 | 0.24 | 3.52 |
| 2 | 64 | | 16 | | 8 | | | 8 | 0.24 | 0.24 | 3.52 |
| 3 | 52 | | 28 | | 8 | | | 8 | 0.24 | 0.24 | 3.52 |
| 4 | 84 | | | | 4 | | | 8 | 0.24 | 0.24 | 3.52 |
| 5 | 76 | | | | 12 | | | 8 | 0.24 | 0.24 | 3.52 |
| 6 | 72 | | | | 16 | | | 8 | 0.24 | 0.24 | 3.52 |
| 7 | 40 | | 40 | | 8 | | | 8 | 0.24 | 0.24 | 3.52 |
| 8 | 88 | | | | | | | 8 | 0.24 | 0.24 | 3.52 |
| 9 | 68 | | | | 20 | | | 8 | 0.24 | 0.24 | 3.52 |
| 10 | 68 | | | | | 20 | | 8 | 0.24 | 0.24 | 3.52 |
| 11 | 82 | | | | | | 6 | 8 | 0.24 | 0.24 | 3.52 |
| 12 | | 80 | | | 8 | | | 8 | 0.24 | 0.24 | 3.52 |
| 13 | | | | 80 | 8 | | | 8 | 0.24 | 0.24 | 3.52 |
| 14 | | 24 | | 56 | 8 | | | 8 | 0.24 | 0.24 | 3.52 |

| | | | | | | | | | | | |
|---|---|---|---|---|---|---|---|---|---|---|---|
| Note: The amount of each component shown in the table is the weight including water. | | | | | | | | | | | |

**Table 2 Coated films and test results of performance thereof**

| Ex. / Comp. Ex. | Coated film | | Performance test | | | | |
|---|---|---|---|---|---|---|---|
| | Plastic film | Aqueous coating composition | Grade of surface dryness and anti-blocking | Adhesion/ N/30mm | Haze value | Pattern sharpness before hot pressing | Pattern sharpness after hot pressing |
| Ex. 1 | Platilon^{®} U2102Ak | 1 | 5 | 33.04 | 119.3 | 5 | 5 |
| Ex. 2 | Platilon^{®} U2102Ak | 2 | 4 | 31.78 | 82.6 | 5 | 5 |
| Ex. 3 | Platilon^{®} U2102Ak | 3 | 4 | 43.14 | 86.5 | 4 | 4 |
| Comp. Ex. 1 | Platilon^{®} U2102Ak | 7 | 2 | 47.71 | 77.3 | 3 | 3 |
| Comp. Ex. 2 | Platilon^{®} U2102Ak | 12 | 2 | 40.29 | 99.5 | 3 | 2 |
| Comp. Ex. 3 | Platilon^{®} U2102Ak | 13 | 2 | 28.11 | 76.4 | 2 | 2 |
| Comp. Ex. 4 | Platilon^{®} U2102Ak | 14 | 1 | 26.09 | 126.7 | 2 | 1 |
| Comp. Ex. 5 | Platilon^{®} PT7511 | 1 | 5 | 4.15 | 52.8 | 2 | 2 |
| Comp. Ex. 6 | Platilon^{®} PT6411 | 1 | 5 | 23.68 | 74.1 | 3 | 3 |
| Ex. 4 | Platilon^{®} PS8010 | 1 | 5 | 21.09 | 113.5 | 5 | 5 |
| Ex. 5 | Platilon^{®} U2100C-T | 1 | 5 | 17.49 | 96.7 | 5 | 5 |
| Comp. Ex. 7 | Platilon^{®} HU2105C-T | 1 | 5 | 13.66 | 120 | 4 | 4 |
| Comp. Ex. 8 | Platilon^{®} U2102Ak | 8 | 2 | 49.71 | 117.5 | 3 | 3 |
| Ex. 6 | Platilon^{®} U2102Ak | 4 | 4 | 48.55 | 92 | 4 | 4 |
| Ex. 7 | Platilon^{®} U2102Ak | 5 | 5 | 17 | 80 | 5 | 4 |
| Ex. 8 | Platilon^{®} U2102Ak | 6 | 4 | 17.24 | 106.5 | 4 | 4 |
| Comp. Ex. 9 | Platilon^{®} U2102Ak | 9 | 5 | 13.73 | 91.7 | 4 | 4 |
| Comp. Ex. 10 | Platilon^{®} U2102Ak | 10 | 5 | 43.66 | 76.3 | 4 | 4 |
| Ex. 9 | Platilon^{®} U2102Ak | 11 | 5 | 47.19 | 94.9 | 3 | 3 |

The coated films of Examples 1-9 had good grade of surface dryness, adhesion and haze value, and the patterns printed on the film surface could remain sharp before and after hot pressing.

The aqueous coating composition 7 used **in** Comparative Example 1 comprised a small amount of dispersion of an anionic polyurethane based on polycarbonate polyol. The coated film obtained by coating with the aqueous coating composition 7 had unqualified grade of surface dryness and anti-blocking and unqualified haze value.

The aqueous coating composition 12 used **in** Comparative Example 2 comprised no dispersion of an anionic polyurethane based on polycarbonate polyol. The coated film obtained by coating with the aqueous coating composition 12 had unqualified grade of surface dryness and anti-blocking, and the pattern printed on the film surface could not remain sharp after hot pressing.

The aqueous coating composition 13 used **in** Comparative Example 3 comprised no dispersion of an anionic polyurethane based on polycarbonate polyol. The coated film obtained by coating with the aqueous coating composition 13 had unqualified grade of surface dryness and anti-blocking, unqualified haze value and the pattern printed on the film surface could not remain sharp before and after hot pressing.

The aqueous coating composition 14 used **in** Comparative Example 4 comprised no dispersion of an anionic polyurethane based on polycarbonate polyol. The coated film obtained by coating with the aqueous coating composition 14 had unqualified grade of surface dryness and anti-blocking, and the pattern printed on the film surface could not remain sharp before and after hot pressing.

The plastic films used **in** Comparative Examples 5 and 6 were films of a thermoplastic polyurethane based on polyether polyol. The resulting coated films could not meet the requirements of adhesion, haze value, and the pattern sharpness before and after hot pressing.

The plastic film used in Comparative Example 7 was a film of a thermoplastic polyurethane based on polyester polyol with Shore hardness of 75A. The resulting coated film had poor adhesion.

The aqueous coating composition 8 used in Comparative Example 8 comprised 88% by weight of a dispersion of an anionic polyurethane based on polycarbonate polyol and comprised no dispersion of anionic silica. The coated film obtained by coating with the aqueous coating composition 8 had unqualified grade of surface dryness and anti-blocking.

The aqueous coating composition 9 used in Comparative Example 9 comprised 20% by weight of a dispersion of anionic amorphous silica. The film obtained by coating with the aqueous coating composition 9 had unqualified adhesion.

The aqueous coating composition 10 used in Comparative Example 10 comprised 20% by weight of a 10% aqueous dispersion of fumed silica Acematt TS 100, wherein the dispersion was non-ionic, and the film coated therewith had unqualified haze value.

## Claims

1. A coated film comprising a plastic film with Shore hardness of not less than 80A and a coating formed by applying an aqueous coating composition to the plastic film, wherein the plastic film is a film of a thermoplastic polyurethane based on polyester polyol, and the aqueous coating composition comprises:
a. 45% by weight to 85% by weight of a dispersion of an anionic polyurethane based on polycarbonate polyol;
b. 0% by weight to 40% by weight of a dispersion of an anionic polyurethane based on polyether polyol;
c. 2% by weight to 18% by weight of a dispersion of anionic silica;
d. 0.5% by weight to 10% by weight of a blocked isocyanate; and
e. 0.1% by weight to 10% by weight of an additive;
the amounts above being relative to the total weight of the composition.

2. The coated film according to claim 1, **characterized in that** the dispersion of an anionic polyurethane based on polycarbonate polyol has at least one of the following characteristics:
• weight average molecular weight of 1000000-20000000, most preferably 1500000-12000000, tested by gel chromatography according to GB/T 21863-2008; and
• 100% modulus of 5 MPa-10 MPa, tested according to DIN 53504.

3. The coated film according to claim 1 or 2, **characterized in that** the dispersion of an anionic polyurethane based on polycarbonate polyol is a dispersion of carboxyl-containing polyurethane based on polycarbonate polyol with carboxyl content of 0.05% by weight to 2% by weight, most preferably 0.6% by weight to 1% by weight, relative to the total weight of solid constituents of the dispersion of carboxyl-containing polyurethane based on polycarbonate polyol.

4. The coated film according to any one of claims 1 to 3, **characterized in that** the dispersion of an anionic polyurethane based on polycarbonate polyol is in an amount of 52% by weight to 84% by weight, preferably 64% by weight to 82% by weight, most preferably 79% by weight to 81% by weight, relative to the total weight of the composition.

5. The coated film according to any one of claims 1 to 4, **characterized in that** the dispersion of an anionic polyurethane based on polyether polyol has at least one of the following characteristics:
• weight average molecular weight of 200000-600000, tested by gel chromatography according to GB/T 21863-2008; and
• 100% modulus of 1 MPa-4 MPa, tested according to DIN 53504.

6. The coated film according to any one of claims 1 to 5, **characterized in that** the dispersion of an anionic polyurethane based on polyether polyol is a dispersion of carboxyl-containing polyurethane based on polyether polyol with carboxyl content of 0.05% by weight to 0.5% by weight, relative to the total weight of solid constituents of the dispersion of carboxyl-containing polyurethane based on polyether polyol.

7. The coated film according to any one of claims 1 to 6, **characterized in that** Z-average particle size of the dispersion of anionic silica is of 10 nm-50 nm, tested according to ISO13321.

8. The coated film according to any one of claims 1 to 7, **characterized in that** the dispersion of anionic silica is in an amount of 4% by weight to 16% by weight, relative to the total weight of the composition.

9. The coated film according to any one of claims 1 to 8, **characterized in that** the dispersion of anionic silica is amorphous.

10. The coated film according to any one of claims 1 to 9, **characterized in that** the film of a thermoplastic polyurethane based on polyester polyol has at least one of the following characteristics:
• specific gravity of 1.1-1.3, tested according to D-792;
• tensile strength of 50 MPa-80 MPa, tested by using GOTECH tensile machine GOTECH/AI-3000 from GOTECH Testing Machines Inc. according to DIN EN ISO527,
• elongation at break of 500%-700%, tested by using GOTECH tensile machine GOTECH/AI-3000 from GOTECH Testing Machines Inc. according to DIN EN ISO527;
• maximum softening temperature of 130°C-200°C, preferably 140°C-190°C, more preferably 150°C-185°C, most preferably 155°C-180°C, tested with a thermomechanical analyzer from Mettler Toledo according to E2347-04;
• minimum softening temperature of 100°C-160°C, preferably 110°C-160°C, more preferably 120°C-160°C, most preferably 125°C-155°C, tested with a thermomechanical analyzer from Mettler Toledo according to E2347-04; and
• 100% modulus of 2 MPa-12 MPa, preferably 3 MPa-11 MPa, more preferably 4 MPa-11 MPa, and most preferably 5 MPa-11 MPa, tested by using GOTECH tensile machine GOTECH/AI-3000 from GOTECH Testing Machines Inc. according to DIN EN ISO527.

11. A method for preparing the coated film according to any one of claims **1-10,** comprising the following steps:
i. providing an aqueous coating composition, comprising:
a. 45% by weight to 85% by weight of a dispersion of an anionic polyurethane based on polycarbonate polyol;
b. 0% by weight to 40% by weight of a dispersion of an anionic polyurethane based on polyether polyol;
c. 2% by weight to 18% by weight of a dispersion of anionic silica;
d. 0.5% by weight to 10% by weight of a blocked isocyanate; and
e. 0.1% by weight to 10% by weight of an additive;
the amounts above being relative to the total weight of the composition;
ii. applying the composition of step i to at least one side of a film of a thermoplastic polyurethane based on polyester polyol with Shore hardness of not less than 80A; and
iii. drying, to obtain the coated film.

12. Use of the coated film according to any one of claims **1-10** for manufacturing shaped bodies.

13. A method for manufacturing shaped bodies, comprising the following steps:
A. providing a coated film according to any one of claims **1-10;**
B. optionally painting, printing or stamping at least one layer on the coated side of the film; and
C. bonding the side of the film facing away from the coating to the substrate by hot pressing, to obtain a shaped body.

14. A method according to claim 13, **characterized in that** the substrate is fabric.

15. A shaped body manufactured by the method according to any one of claims 13-14.

16. The shaped body according to claim 15, **characterized in that** it is a shoe or clothing.

## Patentansprüche

1. Beschichtete Folie, umfassend eine Kunststofffolie mit einer Shore-Härte von nicht weniger als 80A und eine durch Aufbringen einer wässrigen Beschichtungszusammensetzung auf die Kunststofffolie gebildete Beschichtung, wobei es sich bei der Kunststofffolie um eine Folie aus einem thermoplastischen Polyurethan auf Basis von Polyesterpolyol handelt und die wässrige Beschichtungszusammensetzung Folgendes umfasst:
**a.** 45 Gew.-% bis 85 Gew.-% einer Dispersion eines anionischen Polyurethans auf Basis von Polycarbonatpolyol;
b. 0 Gew.-% bis 40 Gew.-% einer Dispersion eines anionischen Polyurethans auf Basis von Polyetherpolyol;
c. 2 Gew.-% bis 18 Gew.-% einer Dispersion von anionischer Kieselsäure;
d. 0,5 Gew.-% bis 10 Gew.-% eines blockierten Isocyanats; und
e. 0,1 Gew.-% bis 10 Gew.-% eines Additivs;
wobei sich die obigen Mengen auf das Gesamtgewicht der Zusammensetzung beziehen.

2. Beschichtete Folie nach Anspruch 1, **dadurch gekennzeichnet, dass** die Dispersion eines anionischen Polyurethans auf Basis von Polycarbonatpolyol mindestens eine der folgenden Eigenschaften aufweist:
• gewichtsmittleres Molekulargewicht von 1.000.000-20.000.000, ganz besonders bevorzugt 1.500.000-12.000.000, getestet mittels Gelchromatographie gemäß GB/T 21863-2008; und
• 100-%-Modul von 5 MPa-10 MPa, getestet gemäß DIN 53504.

3. Beschichtete Folie nach Anspruch 1 oder 2, **dadurch gekennzeichnet, dass** es sich bei der Dispersion eines anionischen Polyurethans auf Basis von Polycarbonatpolyol um eine Dispersion von carboxylgruppenhaltigem Polyurethan auf Basis von Polycarbonatpolyol mit einem Carboxylgruppengehalt von 0,05 Gew.-% bis 2 Gew.-%, ganz besonders bevorzugt 0,6 Gew.-% bis 1 Gew.-%, bezogen auf das Gesamtgewicht fester Bestandteile der Dispersion von carboxylgruppenhaltigem Polyurethan auf Basis von Polycarbonatpolyol, handelt.

4. Beschichtete Folie nach einem der Ansprüche 1 bis 3, **dadurch gekennzeichnet, dass** die Dispersion eines anionischen Polyurethans auf Basis von Polycarbonatpolyol in einer Menge von 52 Gew.-% bis 84 Gew.-%, bevorzugt 64 Gew.-% bis 82 Gew.-%, ganz besonders bevorzugt 79 Gew.-% bis 81 Gew.-%, bezogen auf das Gesamtgewicht der Zusammensetzung, vorliegt.

5. Beschichtete Folie nach einem der Ansprüche 1 bis 4, **dadurch gekennzeichnet, dass** die Dispersion eines anionischen Polyurethans auf Basis von Polyetherpolyol mindestens eine der folgenden Eigenschaften aufweist:
• gewichtsmittleres Molekulargewicht von 200.000-600.000, getestet mittels Gelchromatographie gemäß GB/T 21863-2008; und
• 100-%-Modul von 1 MPa-4 MPa, getestet gemäß DIN 53504.

6. Beschichtete Folie nach einem der Ansprüche 1 bis 5, **dadurch gekennzeichnet, dass** es sich bei der Dispersion eines anionischen Polyurethans auf Basis von Polyetherpolyol um eine Dispersion von carboxylgruppenhaltigem Polyurethan auf Basis von Polyetherpolyol mit einem Carboxylgruppengehalt von 0,05 Gew.-% bis 0,5 Gew.-%, bezogen auf das Gesamtgewicht fester Bestandteile der Dispersion von carboxylgruppenhaltigem Polyurethan auf Basis von Polyetherpolyol, handelt.

7. Beschichtete Folie nach einem der Ansprüche 1 bis 6, **dadurch gekennzeichnet, dass** die Z-mittlere Teilchengröße der Dispersion von anionischer Kieselsäure 10 nm-50 nm beträgt, getestet gemäß ISO13321.

8. Beschichtete Folie nach einem der Ansprüche 1 bis 7, **dadurch gekennzeichnet, dass** die Dispersion von anionischer Kieselsäure in einer Menge von 4 Gew.-% bis 16 Gew.-%, bezogen auf das Gesamtgewicht der Zusammensetzung, vorliegt.

9. Beschichtete Folie nach einem der Ansprüche 1 bis 8, **dadurch gekennzeichnet, dass** die Dispersion von anionischer Kieselsäure amorph ist.

10. Beschichtete Folie nach einem der Ansprüche 1 bis 9, **dadurch gekennzeichnet, dass** die Folie aus einem thermoplastischen Polyurethan auf Basis von Polyesterpolyol mindestens eine der folgenden Eigenschaften aufweist:
• spezifisches Gewicht von 1,1-1,3, getestet gemäß D-792;
• Zugfestigkeit von 50 MPa-80 MPa, getestet auf einer GOTECH-Zugmaschine GOTECH/AI-3000 von GOTECH Testing Machines Inc. gemäß DIN EN ISO527;
• Bruchdehnung von 500 %-700 %, geprüft auf einer GOTECH-Zugmaschine GOTECH/AI-3000 von GOTECH Testing Machines Inc. gemäß DIN EN ISO527;
• maximale Erweichungstemperatur von 130 °C-200 °C, bevorzugt 140 °C-190 °C, weiter bevorzugt 150 °C-185 °C, ganz besonders bevorzugt 155 °C-180 °C, getestet mit einem thermomechanischen Analysator von Mettler Toledo gemäß E2347-04;
• minimale Erweichungstemperatur von 100 °C-160 °C, bevorzugt 110 °C-160 °C, weiter bevorzugt 120 °C-160 °C, ganz besonders bevorzugt 125 °C-155 °C, getestet mit einem thermomechanischen Analysator von Mettler Toledo gemäß E2347-04; und
• 100-%-Modul von 2 MPa-12 MPa, bevorzugt 3 MPa-11 MPa, weiter bevorzugt 4 MPa-11 MPa und ganz besonders bevorzugt 5 MPa-11 MPa, getestet auf einer GOTECH-Zugmaschine GOTECH/AI-3000 der Firma GOTECH Testing Machines Inc. gemäß DIN EN ISO527.

11. Verfahren zur Herstellung der beschichteten Folie nach einem der Ansprüche 1-10, das die folgenden Schritte umfasst:
i. Bereitstellen einer wässrigen Beschichtungszusammensetzung, umfassend:
a. 45 Gew.-% bis 85 Gew.-% einer Dispersion eines anionischen Polyurethans auf Basis von Polycarbonatpolyol;
b. 0 Gew.-% bis 40 Gew.-% einer Dispersion eines anionischen Polyurethans auf Basis von Polyetherpolyol;
c. 2 Gew.-% bis 18 Gew.-% einer Dispersion von anionischer Kieselsäure;
d. 0,5 Gew.-% bis 10 Gew.-% eines blockierten Isocyanats; und
e. 0,1 Gew.-% bis 10 Gew.-% eines Additivs;
wobei sich die obigen Mengen auf das Gesamtgewicht der Zusammensetzung beziehen;
ii. Aufbringen der Zusammensetzung aus Schritt i auf mindestens eine Seite einer Folie aus einem thermoplastischen Polyurethan auf Basis von Polyesterpolyol mit einer Shore-Härte von mindestens 80A; und
iii. Trocknen unter Erhalt der beschichteten Folie.

12. Verwendung der beschichteten Folie nach einem der Ansprüche 1-10 zur Herstellung von Formkörpern.

13. Verfahren zur Herstellung von Formkörpern, das die folgenden Schritte umfasst:
**A.** Bereitstellen einer beschichteten Folie nach einem der Ansprüche 1-10;
B. gegebenenfalls Anstreichen, Bedrucken oder Prägen mindestens einer Schicht auf der beschichteten Seite der Folie; und
C. Verkleben der von der Beschichtung abgewandten Seite der Folie mit dem Substrat durch Heißpressen unter Erhalt eines Formkörpers.

14. Verfahren nach Anspruch 13, **dadurch gekennzeichnet, dass** es sich bei dem Substrat um ein textiles Flächengebilde handelt.

15. Formkörper, hergestellt durch das Verfahren nach einem der Ansprüche **13-14.**

16. Formkörper nach Anspruch 15, **dadurch gekennzeichnet, dass** es sich dabei um einen Schuh oder ein Kleidungsstück handelt.

## Revendications

1. Film revêtu comprenant un film plastique ayant une dureté Shore de pas moins de 80A et un revêtement formé par application d'une composition aqueuse de revêtement sur le film plastique, dans lequel le film plastique est un film d'un polyuréthane thermoplastique à base de polyol de polyester et la composition aqueuse de revêtement comprend :
a. 45 % en poids à 85 % en poids d'une dispersion d'un polyuréthane anionique à base de polyol de polycarbonate ;
b. 0 % en poids à 40 % en poids d'une dispersion d'un polyuréthane anionique à base de polyol de polyéther ;
c. 2 % en poids à 18 % en poids d'une dispersion de silice anionique ;
d. 0,5 % en poids à 10 % en poids d'un isocyanate bloqué ; et
e. 0,1 % en poids à 10 % en poids d'un additif ;
les quantités ci-dessus étant par rapport au poids total de la composition.

2. Film revêtu selon la revendication 1, **caractérisé en ce que** la dispersion d'un polyuréthane anionique à base de polyol de polycarbonate a au moins l'une des caractéristiques suivantes :
• une masse moléculaire moyenne en poids, testée par chromatographie par perméation de gel selon la norme GB/T 21863-2008, de 1000000 à 20000000, le plus préférablement de 1500000 à 12000000 ; et
• un module à 100 % d'allongement, testé selon la norme DIN 53504, de 5 MPa à 10 MPa.

3. Film revêtu selon la revendication 1 ou 2, **caractérisé en ce que** la dispersion d'un polyuréthane anionique à base de polyol de polycarbonate est une dispersion de polyuréthane contenant des groupes carboxyle à base de polyol de polycarbonate ayant une teneur en groupes carboxyle de 0,05 % en poids à 2 % en poids, le plus préférablement de 0,6 % en poids à 1 % en poids, par rapport au poids total des constituants solides de la dispersion de polyuréthane contenant des groupes carboxyle à base de polyol de polycarbonate.

4. Film revêtu selon l'une quelconque des revendications 1 à 3, **caractérisé en ce que** la dispersion d'un polyuréthane anionique à base de polyol de polycarbonate est présente en une quantité de 52 % en poids à 84 % en poids, de préférence de 64 % en poids à 82 % en poids, le plus préférablement de 79 % en poids à 81 % en poids, par rapport au poids total de la composition.

5. Film revêtu selon l'une quelconque des revendications 1 à 4, **caractérisé en ce que** la dispersion d'un polyuréthane anionique à base de polyol de polyéther a au moins l'une des caractéristiques suivantes :
• une masse moléculaire moyenne en poids, testée par chromatographie par perméation de gel selon la norme GB/T 21863-2008, de 200000 à 600000 ; et
• un module à 100 % d'allongement, testé selon la norme DIN 53504, de 1 MPa à 4 MPa.

6. Film revêtu selon l'une quelconque des revendications 1 à 5, **caractérisé en ce que** la dispersion d'un polyuréthane anionique à base de polyol de polyéther est une dispersion de polyuréthane contenant des groupes carboxyle à base de polyol de polyéther ayant une teneur en groupes carboxyle de 0,05 % en poids à 0,5 % en poids, par rapport au poids total des constituants solides de la dispersion de polyuréthane contenant des groupes carboxyle à base de polyol de polyéther.

7. Film revêtu selon l'une quelconque des revendications 1 à 6, **caractérisé en ce que** la taille moyenne des particules en Z de la dispersion de silice anionique, testée selon la norme ISO13321, est de 10 nm à 50 nm.

8. Film revêtu selon l'une quelconque des revendications 1 à 7, **caractérisé en ce que** la dispersion de silice anionique est présente en une quantité de 4 % en poids à 16 % en poids, par rapport au poids total de la composition.

9. Film revêtu selon l'une quelconque des revendications 1 à 8, **caractérisé en ce que** la dispersion de silice anionique est amorphe.

10. Film revêtu selon l'une quelconque des revendications 1 à 9, **caractérisé en ce que** le film d'un polyuréthane thermoplastique à base de polyol de polyester a au moins l'une des caractéristiques suivantes :
• une densité, testée selon la norme D-792, de 1,1 à 1,3 ;
• une résistance à la traction, testée à l'aide d'une machine de traction GOTECH/AI-3000 provenant de chez GOTECH Testing Machines Inc. selon la norme DIN EN ISO527, de 50 MPa à 80 MPa ;
• un allongement à la rupture, testé à l'aide d'une machine de traction GOTECH/AI-3000 provenant de chez GOTECH Testing Machines Inc. selon la norme DIN EN ISO527, de 500 % à 700 % ;
• une température de ramollissement maximale, testée avec un analyseur thermomécanique provenant de chez Mettler Toledo selon la norme E2347-04, de 130 °C à 200 °C, de préférence de 140 °C à 190 °C, plus préférablement de 150 °C à 185 °C, le plus préférablement de 155 °C à 180 °C ;
• une température de ramollissement minimale, testée avec un analyseur thermomécanique provenant de chez Mettler Toledo selon la norme E2347-04, de 100 °C à 160 °C, de préférence de 110 °C à 160 °C, plus préférablement de 120 °C à 160 °C, le plus préférablement de 125 °C à 155 °C ; et
• un module à 100 % d'allongement, testé à l'aide d'une machine de traction GOTECH/AI-3000 provenant de chez GOTECH Testing Machines Inc. selon la norme DIN EN ISO527, de 2 MPa à 12 MPa, de préférence de 3 MPa à 11 MPa, plus préférablement de 4 MPa à 11 MPa et le plus préférablement de 5 MPa à 11 MPa.

11. Procédé pour la préparation du film revêtu selon l'une quelconque des revendications 1 à 10, comprenant les étapes suivantes :
i. la fourniture d'une composition aqueuse de revêtement comprenant :
a. 45 % en poids à 85 % en poids d'une dispersion d'un polyuréthane anionique à base de polyol de polycarbonate ;
b. 0 % en poids à 40 % en poids d'une dispersion d'un polyuréthane anionique à base de polyol de polyéther ;
c. 2 % en poids à 18 % en poids d'une dispersion de silice anionique ;
d. 0,5 % en poids à 10 % en poids d'un isocyanate bloqué ; et
e. 0,1 % en poids à 10 % en poids d'un additif ;
les quantités ci-dessus étant par rapport au poids total de la composition ;
ii. l'application de la composition de l'étape i. sur au moins un côté d'un film d'un polyuréthane thermoplastique à base de polyol de polyester ayant une dureté Shore de pas moins de 80A ; et
iii. le séchage, pour obtenir le film revêtu.

12. Utilisation du film revêtu selon l'une quelconque des revendications 1 à 10 pour la fabrication de corps mis en forme.

13. Procédé pour la fabrication de corps mis en forme, comprenant les étapes suivantes :
A. la fourniture d'un film revêtu selon l'une quelconque des revendications 1 à 10 ;
**B.** éventuellement la peinture, l'impression ou l'estampage d'au moins une couche sur le côté revêtu du film ; et
**C.** le collage du côté du film à l'opposé du revêtement au substrat par pressage à chaud, pour obtenir un corps mis en forme.

14. Procédé selon la revendication 13, **caractérisé en ce que** le substrat est du tissu.

15. Corps mis en forme fabriqué par le procédé selon l'une quelconque des revendications 13 à 14.

16. Corps mis en forme selon la revendication 15, **caractérisé en ce qu'**il s'agit d'une chaussure ou d'un vêtement.
